# EUROPEAN PATENT APPLICATION

(11) **EP 1 684 171 A1**
(43) Date of publication of application: **26.07.2006**
(21) Application number: 04787761.8
(22) Date of filing: 08.09.2004
(51) Int. Cl.: G06F 9/445, G06F 17/30

(54) **SYSTEM FOR SUPPORTING INTRODUCTION/OPERATION OF INTEGRATING JOB SOFTWARE**

(30) Priority: 27.10.2003 JP 2003365645
(71) Applicant: MATSUSHITA ELECTRIC INDUSTRIAL CO., LTD., Kadoma-shi, Osaka 571-8501 (JP)
(72) Inventor: KOIZUMI, Atsuhiko c/o Matsushita El. Ind. Co., Ltd, Osaka 540-6319 (JP); HOSHINO, Satoshi c/o Matsushita El. Ind. Co., Ltd, Osaka 540-6319 (JP); TSUKAMOTO, Y. c/o Matsushita El. Ind. Co., Ltd, Osaka 540-6319 (JP); SHIRANAGA, Masaya c/o Matsushita El. Ind. Co., Ltd, Osaka 540-6319 (JP)
(74) Representative: Dempster, Benjamin John Naftel
(86) International application number: PCT/JP2004/013078
(87) International publication number: WO 2005/041032

(57) **Abstract**

A system for supporting introduction/operation of Enterprise Resource Planning software by means of a computer. In this system, a document management unit (14) manages data for document including business flow diagrams expressing business flows by hierarchized business elements. A database (15) relates a business element to a customize item, its location, and a document. A search unit (12) searches the designated business element and a location of customize item corresponding to a designated business element and other business elements on a lower layer than the designated business element.

## Description

### Technical Field

The present invention relates to a system for supporting introduction or operation of an Enterprise Resource Planning (ERP) package.

### Background Art

The ERP package is package software for integrating and managing core business of an enterprise. The ERP package has various modules or components, such as inventory and purchasing management, sales management, financial accounting, management accounting, personnel management, and the like, as for each facet of the core business like logistics, accounting, human resources, and etc. Data to be processed by those modules are collectively managed on one logical database, instead of module by module databases. Cooperating mutually in real time, the respective modules access this database to automatically perform a series of processes related to a plurality of modules, e.g. from the inventory management to the financial accounting. That is to say that the ERP package provides concrete and opportune valuation subject matters to optimize all the facets of the business in one company or between companies.

The companies, which plan to introduce the ERP package, properly select available modules from various modules according to their own business. There is a possibility that the selected modules, if not modified, are not suitable for the processes of the company's own. The ERP package, however, can deal with diversified business types, a number of organization structures, the culture gap, and differences in nation, by providing a number of customizing items. If setting parameters to the customizing items makes the ERP package fit to the business processes of the company, any further program is not necessary to be developed. In such case, as compared with that information system is constructed and maintained by the company itself, the cost and time can be reduced. No matter how the parameter is set, if any gap remains between the function provided by the ERP package and the business process of the company, add-on programs can be developed, or some modifications can be added to the ERP package itself, in order to eliminate the gap. However, it is desirable to avoid developing the add-on program or modifying the ERP package itself, because it spoils the merit of reducing the introduction cost or the operation cost.

Therefore, at the introduction of the ERP package, it is necessary to analyze the business process and judge whether or not to develop the add-on program or modify the ERP package. The judgment requires know-how for the parameter setting of the ERP package in addition to analyzability of the business process. Though the ERP package is provided with an implementation guide for optimizing the parameter setting, there is a large number of customizing items, and the relation between the business requirements and the customizing items is complicated in general. In the implementation guide, explanations of respective customizing items are described hierarchically corresponding to the hierarchical structure of customizing items, but a mere work for deriving fragments of knowledge of the customizing items from such explanations is very hard for end-users. It is more difficult for the user to make the business requirement reflect on the parameter setting while considering the relation between the customizing items. Accordingly, at examining the relation between the business requirement and the parameter setting and at reflecting the business requirement on the parameter configuration, it is usual that such operations depend on the know-how of consultants.

According to the module system of the ERP package, the consultants are trained individually. On the other hand, since the business requirements are concerned with the plurality of module systems, the plurality of consultants are involves in a project to which the ERP package is introduced. To set the parameter, each consultant technically examines the module of which he/she is in charge, with the result that the adjustment is performed between the module systems.

Such parameter setting is performed by trial and error. When the parameter setting information made by the person concerned with the project is missing, it is hard to confirm how the parameter was set in the project. Therefore, the result of the parameter setting is usually described in documents for the purpose of the system maintenance/operation. At the introduction of the ERP package, various documents in addition to such document are prepared, such as business process procedure, manuals, and functional specifications and technical specifications of development program, and so on. Those documents are stored in a form of paper or electronic data. For instance, the electronic data of the documents are classified to hierarchized directory depending on its kind and content of the document.

Accordingly, even end-user and other persons having nothing to do with the project can share the information about the project to some degree. When any trouble comes out after the start of the system operation, those documents can be utilized to settle the trouble.

### Disclosure of the Invention

However, even if various documents are stored, the documents do not always describe all the knowledge of the participants in the project. All of users always cannot obtain necessary information from the documents. In particular, most of users feel that it is hard work to confirm, according to the documents, which parameter setting satisfies an arbitrary businesses requirement. As in the foregoing description, the relation between the business requirement and the parameter setting is complicated. Therefore, even if the respective information about the business requirements or customizing items can be obtained from the documents or the implementation guide, without personal know-how of the consultant, the confirmation becomes partial and insufficient. Otherwise, the confirmation requires a lot of time or efforts of the user. For instance, when the user searches a document concerned with a specific content with a computer, he/she can select directories to be searched based on the specified content, in order to narrow targets to be searched. Thereby, it is possible to avoid the search of many unconcerned documents. However, a target document is not always found out on the selected directory. Further, it is generally difficult for the user to decide the directory including the target document based on the search result.

When users cannot share the know-how not described in the document definitely, it is hard for most of the users to modify the parameter setting based on the change of business requirement and to roll out the project to group companies.

The present invention is suggested considering above-mentioned subject matters in the prior arts, and has an object to provide a system that makes it easy, for a short period, to do the introduction or operation of the ERP package.

To achieve the above object, the invention provides a system for supporting introduction/operation of Enterprise Resource Planning software to support the introduction or operation of the ERP software by a computer. The system is configured by the following construction.

In this system, a document management unit manages data of a relevant document of the ERP software. The relevant document includes a business flow diagram wherein hierarchized business elements express a business flow in a business domain managed by the ERP software. A database is configured to store data for relating a customizing item, a location of the customizing item, and the relevant document to the business domain and the business element of the ERP software. A search unit searches data of the locations of the customizing items corresponding to the specified business element and other business elements on the lower layer than the specified business element, from the database. An output unit outputs a result of the search.

The outputted search result includes the location of the customizing item corresponding to the business element. Therefore, when the user specifies the business element according to the business requirement properly, he/she can know easily the locations of the customizing items concerned to the business element together with the other customizing items corresponding to the business elements on lower layer than the specified business element. Based on the location of the customizing item, the user can obtain an explanation of the customizing item from the implementation guide. In result, the user of the system can obtain the relation between the business requirement and the customizing item with easy, and can share not only the relevant document but also the knowledge not being described in the relevant document. If the search result is outputted being combined with the corresponding business element, the user can know the business elements lower layer than the specified business element.

In this system, when the customizing item is specified, the search unit can search the data of the business element corresponding to the specified customizing item from the database. Hereupon, the user can easily know the business element concerned with the customizing item. When a parameter setting is modified for the customizing item, the user can know which business element the influence is exerted on. By combining the search of the customizing item based on the business element and the search of the business element based on the customizing item, the user can know the relation between the business element and the customizing item, more easily.

Where the customizing item is related to a section of an available district by the database, the search unit also can search from the database the data of the section of the available district corresponding to the customizing item of which location is searched. The sections of the available districts are imparted with a global, a regional, and a local, for example. By obtaining such sections of the available districts, the user can know a scope of the influence caused from the modification of the customizing item.

When a business domain is specified instead of the business element, the search unit can search from the database the data of the location of the customizing item corresponding to the specified business domain. Hereupon, the use can easily obtain outline knowledge about the concerned customizing item per business domain.

Where a business body utilizing the ERP software to the business management is related to the business domain and the business element by the database, the search unit can search all the business bodies, when the business domain is specified without specifying the business body. The output unit outputs the search result combining the corresponding business element and the business body. Hereupon, the user can compare the business element forming the specified business domain for company.

The search unit may search from the database the relevant documents corresponding to the specified business element and the other business elements on the lower layer than the specified business element, instead of the location of the customizing item. Even though there are many relevant documents, the user can easily specify the document corresponding to the business element.

Where program development information is also related to the business element by the database, the search unit can search from the database the program development information corresponding to the specified business element and the other business element on the lower layer than the specified business element, instead of the location of the customizing item. Therefore, the user can easily specify the development information corresponding to the specified business element.

When the data of the relevant document includes the data of program development document, and the relevant document is related to the development information by the database, the search unit may search the development document corresponding to the searched development information. Hereupon, the user can easily know not only the program corresponding to the specified business element, but also the functional specification and the technical specification of the program.

When the data of the relevant document includes data of a program summary report, and the program summary report is related to the business element by the database, the search unit may search the program summary report corresponding to the specified business element and the other business elements on the lower layer than the specified business element, instead of the location of the customizing item. Hereupon, the user can easily refer to the summary report of the program corresponding to the specified business element.

In the system, the computer may further comprise a setting control unit configured to, based on the location of the customizing item selected from the searched result, control to display a setting window corresponding to the item on the ERP software. Because of being provided with the setting control unit, even user not have full knowledge about the ERP software can find easily and certainly the proper customizing item on the software.

In the system, the computer may further comprise an entry update control unit configured to, based on contents of data entry or update of the database, control to enter and update data on the database managed by the ERP software. Because of being provided with the entry update control unit, when specific data is entered or updated in the database of the system, the same processing is performed on the other databases managed by the ERP Software automatically. Therefore, it is possible to simplify the procedures of the maintenance of the both databases.

In accordance with another aspect of the present invention, there is provided a method for supporting introduction/operation of Enterprise Resource Planning software. The method supports introduction or operation of ERP Software by using a computer. The computer is provided with a database for storing data configured to relate a customizing item, a location thereof, and a relevant document to a business domain and a business element of ERP software. The computer performs the steps of managing data of the relevant document of the ERP software, the relevant document including a business flow diagram wherein hierarchized business elements express a business flow in a business domain managed by the ERP software; and searching data of the locations of the customizing items corresponding to the specified business element and other business elements on a lower layer than the specified business element, from the database. The search result is outputted from the output unit.

In accordance with yet another aspect of the present invention, there is provided a program to cause the computer to function as the above-mentioned system. The program is put on the market through an electric communication circuit like the Internet, or in a state of computer-readable recording medium storing the program therein, such as CD-ROM.

The invention employs the above-mentioned configuration and provides the user with the locations of the customizing items corresponding to the business element described in the business flow diagram and the other business element on the lower layer than the specified business element, so that the user can perform the introduction or operation of the ERP software while obtaining the relation between the business element and the customizing item easily. The system is very available for the governance.

### Brief Description of Drawing

Fig. 1 is a diagram showing a schematic structure of a system according to the embodiments of the present invention.
Fig. 2 illustrates an example of a business flow diagram.
Fig. 3 illustrates another example of a business flow diagram.
Fig. 4 is a diagram of a table relating IMG ID information to a path.
Fig. 5 is a diagram of a table relating a document ID, a BFD Number to IMG ID information.
Fig. 6 is a diagram of a table relating a document ID to a business domain ID.
Fig. 7 is a diagram for explaining the search processing.
Fig. 8 is a diagram showing an example of a search form.
Fig. 9 is a diagram showing an example of a web page indicating a search result combining a BFD number and a business domain ID.
Fig. 10 is a diagram showing an example of a web page indicating a search result including an IMG ID number.
Fig. 11 is a diagram of a table relating a BFD number to a development request ID.
Fig. 12 is a diagram of a search form provided with a selecting field for selecting one of an IMG path, a relevant document, and a development request ID.
Fig. 13 is a diagram of a search form provided with an input field for inputting IMG ID information.
Fig. 14 is a diagram of a table relating an IMG ID number to an available district and an IMG path.
Fig. 15 is a diagram of a search form provided with an input field for inputting a company code.
Fig. 16 is a diagram showing an example of a web page indicating a search result combining a BFD number and a company code.
Fig. 17 is a diagram of a table relating IMG ID information to an available district.
Fig. 18 is a diagram showing an example of web page indicating a search result together with a business domain.
Fig. 19 is diagram showing a schematic structure of a system according to another embodiment of the present invention.
Fig. 20 is a diagram showing an example of a window for selecting a customizing item of an information system.
Fig. 21 is a diagram showing an example of a setting window of an information system.
Fig. 22 is a diagram showing an example of the authentication processing.
Fig. 23 is a diagram showing an example of a web page for displaying a log-on window.
Fig. 24 is a diagram for explaining a setting controller of a cooperation control unit.
Fig. 25 is a diagram showing an example of a web page for displaying a menu window.
Fig. 26 is a diagram showing an example of a web page operable to instruct the cooperation with an information system.
Fig. 27 is a diagram showing an example of the cooperation processing.
Fig. 28 is a diagram showing an example of a screen that displays a setting page and an output page of the search result on different windows respectively.

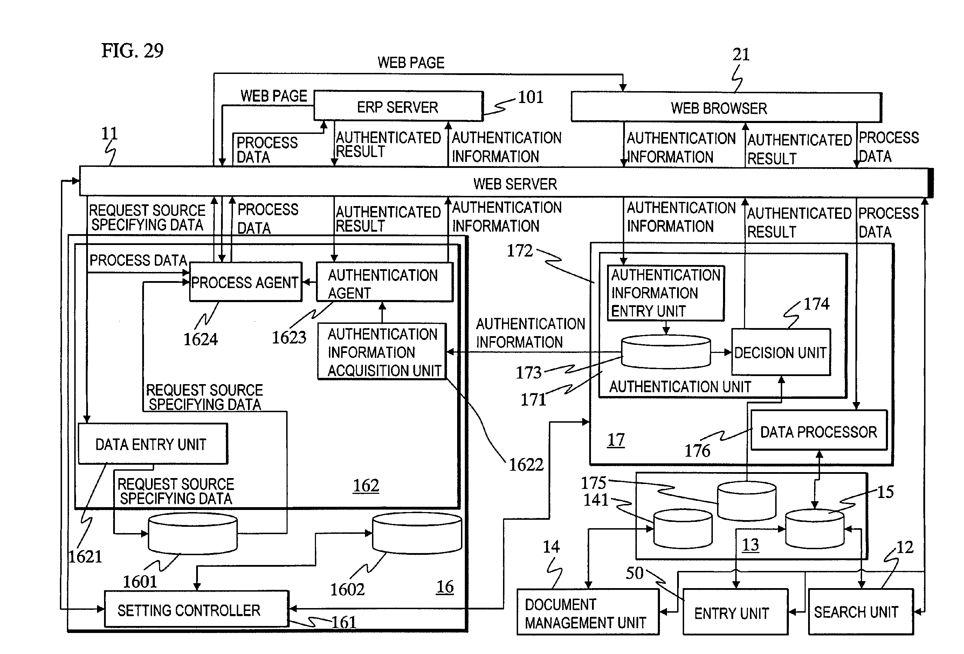

Fig. 29 is a diagram for explaining an entry update controller of the cooperation control unit.

### Best Mode for Carrying Out the Invention

The preferred embodiments of the invention are discussed hereinafter in details according to attached drawings.

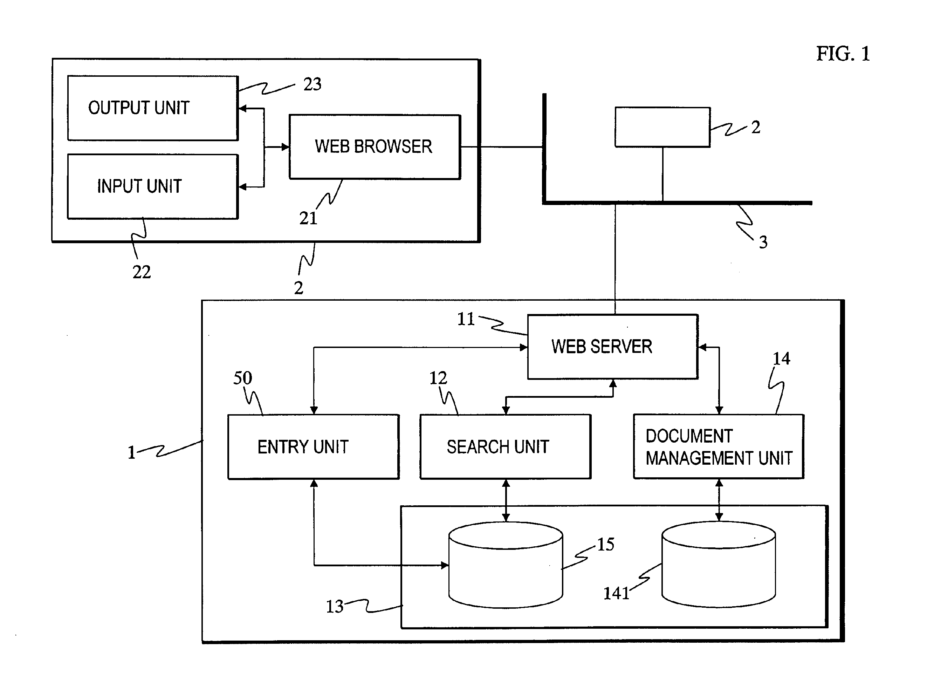

(First Embodiment)
As shown in Fig. 1, in a system on this embodiment, there is a server computer 1 with which a client computer 2 is connected through a local area network 3.

On the server computer 1, a web server 11 runs. A user of the system can browse a web page sent from the web server 11 by means of a web browser 21 on the client computer 2.

The client computer 2 is provided with an input unit 22 and an output unit 23 as a user interface. The user gives an instruction to the web browser 21 by means of the input unit 22, and browses a web page outputted by the output unit 23. A keyboard or a mouse can be used to the input unit 22, and a liquid crystal display or a CRT display can be used to the output unit 23.

According to the user's instruction received by the input unit 22, the web browser 21 sends a transfer request of the web page to the web server 11 through network 3. According to URL thus requested, the web server 11 processes its script on the server side and creates the web page dynamically. The script may be processed by an external program such as CIG, however, the web server 11 in this embodiment, which is provided with an executable environment, is supposed to process the script.

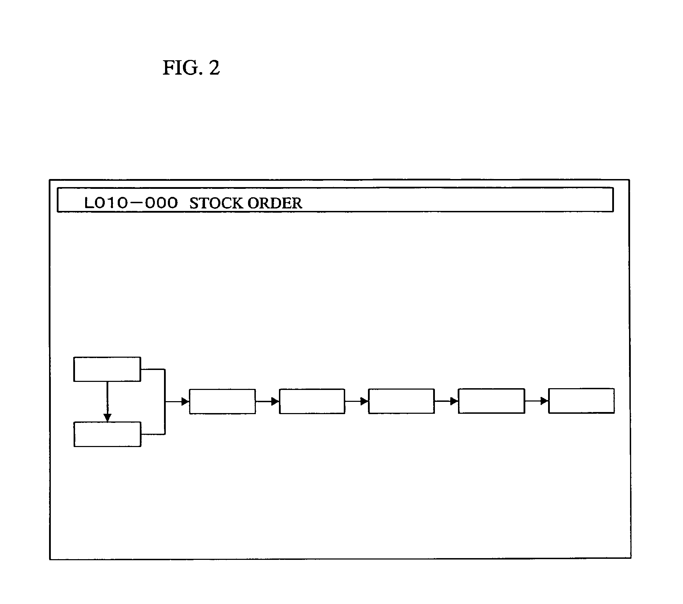

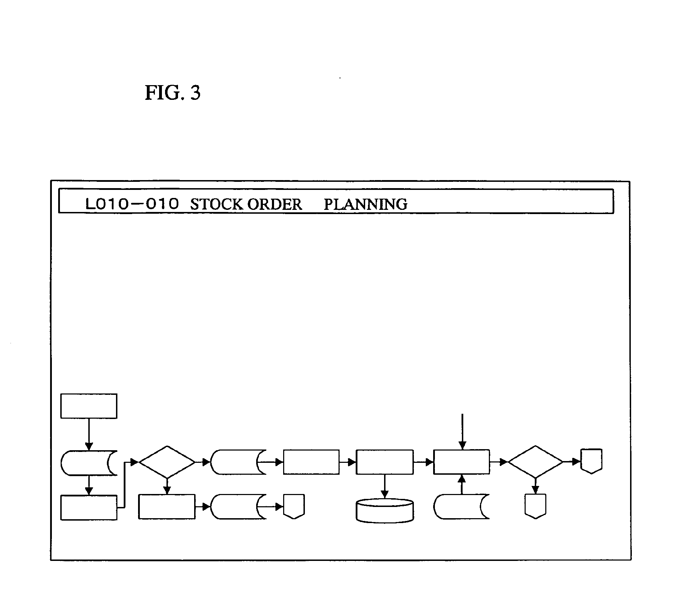

The web page thus dynamically created shows a list of users' shared documents stored in the server computer 1, a search result of a search unit 12, and so on. The electronic data of the users' shared documents are stored in a storage device 13 of the serer computer 1. The storage device 13 is a hard disk drive, for example. The data of the shared documents stored in the storage device 13 include documents relevant to the ERP package. The relevant documents of the ERP package are business flow diagrams (BFD), development documents such as technical specifications and functional specifications of programs, manuals, and the like. The BFD is a diagram in which a business flow in a business domain managed by the ERP package is illustrated by hierarchized business elements. In Fig. 2, the business elements are expressed by rectangular symbols, and the relation of respective business elements are expressed by arrows. When the business domain is a stock/order, the business flow is expressed by the business elements like a planning, a sales order, and others. Those business elements are hierarchized as occasion demands. For instance, the planning, one of the business elements, can be expressed by a plurality of business elements, as shown in Fig. 3. In this embodiment, the plurality of business elements that express a specific business element is described in different documents, as respective documents shown in Fig. 2 and Fig. 3.

A document management unit 14 manages data of those shared documents containing relevant documents of the ERP package. The data of shared document is stored in a database 141 provided to the storage device 13. In response to a call from the web server 11, the document management unit 14 reads a stored document data from the database 141 of the storage device 13, stores a document data into the database 141 of the storage device 13, and creates data of a list of documents stored in the storage device 13. The document management unit 14 can be realized by the cooperation of a program or software component provided with those functions and hardware like CPU or memory in server computer 1. The document data read by the document management unit 14 or the list data of documents created by the document management unit 14 are given to the web server 11. When the web browser 21 requests the shared document or the list of documents, the web server 11 sends the web browser 21 the data given by the document management unit 14 or a web page created according to the data.

The search unit 12 searches a database 15 according to the call from the web server 11, and the search result is sent back to the web server 11.

The database 15 relates a customizing item of the ERP package, its location, and a relevant document to a business domain and a business element. The customizing item of the ERP package is an object of the parameter setting. Each customizing item has a hierarchy structure. For instance, in case of SAP R/3 of SAP AG that is a typical ERP package, the location of the customizing item is expressed by a pass forwarding to the customizing item, 'Enterprise Structure ¥
Assignment¥Human Resource Management¥...', 'Cross-Application Components¥Classification System¥...', 'Financial Accounting¥Financial Accounting Global Settings¥Document¥....' The implementation guide (IMG) describes the explanations of respective customizing items hierarchically. The user can obtain the explanation from IMG if he/she knows the location of the customizing item.

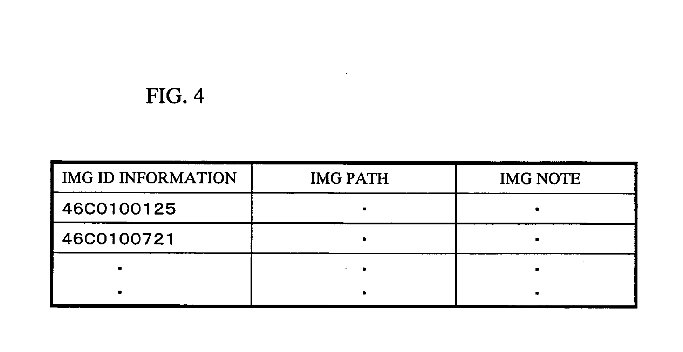

In this embodiment, IMG ID information to identify the customizing item is imparted to each customizing item. As shown in Fig. 4, the database 15 relates the IMG ID information for each customizing item to an IMG path indicating the location of the customizing item. Like this example, an address of the web page indicating an IMG note that describes a summary report of the customizing items or a statement of the setting reasons may be related to the IMG ID information, too.

Additionally, all the relevant documents containing BFD are imparted with IDs for identifying each document, and the business element described in each BFD is imparted with a BFD number for identifying the element. Even if the plurality of business elements described in different BFDs are imparted with a same BFD number, those business elements can be specified uniquely by a set of a document ID and the BFD number.

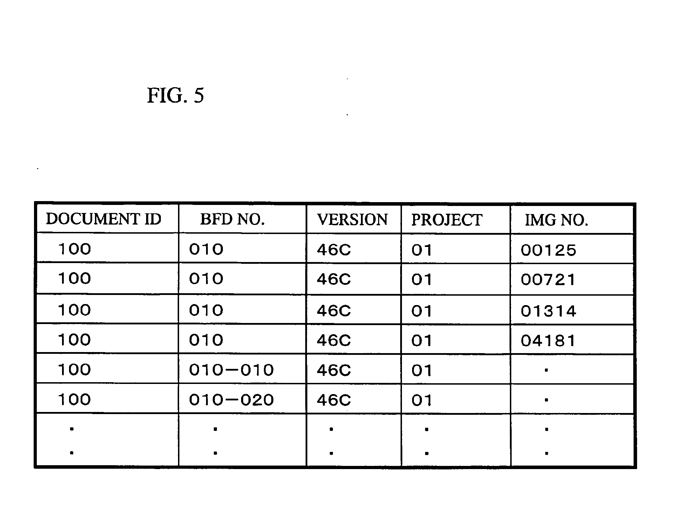

The document ID and the BFD number are related to a version number, a project number, and an IMG ID number according to the data of the database 15, as shown in Fig. 5. The above-mentioned IMG ID information is a set of the version number, the project number, and the IMG ID number. The set shown in Fig. 5 corresponds to the IMG ID information shown in Fig. 4. The version number is number indicating the version of the ERP package. The project number is number indicating the project. The IMG number is number for identifying the customizing item of the corresponding project. As stated previously, since the IMG ID information is related to the IMG path, the document ID and the BFD number is related to the IMG ID information and the IMG path.

In the embodiment, the data of the BFD number specifies not only the business element, but also the path to the hierarchized business element. The BFD number in Fig. 5 is expressed by one numeric string of three figures, or by hyphenating two and more numeric stings of three figures. The number of numeric strings indicates what number layer from the top layer as the first the business element corresponding to the BFD number exists in. When the BFD number is expressed by one numeric string, the BFD number specifies the business element included in the top layer. When the BFD number is expressed by hyphenating two and more numeric stings of three figures, each numeric string specifies the business element in each layer. In Fig. 5, the numeric string is hyphenated with another numeric string on the right side. The right numeric string corresponds to a layer under the layer corresponding to the left numeric string. In this drawing, one numeric string or a mere combination of two numeric strings expresses the BFD number, but a combination of three and more numeric strings may express one BFD number. Of the plural numeric strings expressing the BFD number, the numeric string at the left end indicates the business element included in the top layer. The right-hand numeric string indicates the business element included in the layer of which the number counted from the top layer as the first is identical with the number of numeric strings when the number of numerical strings is counted from left to right. By combining the numeric strings in such way, it is possible to specify one business element, and another business element on the upper layer, expressed by the one business element. Moreover, it is possible to specify the one business element, and other business elements on the lower layer than the one business element.

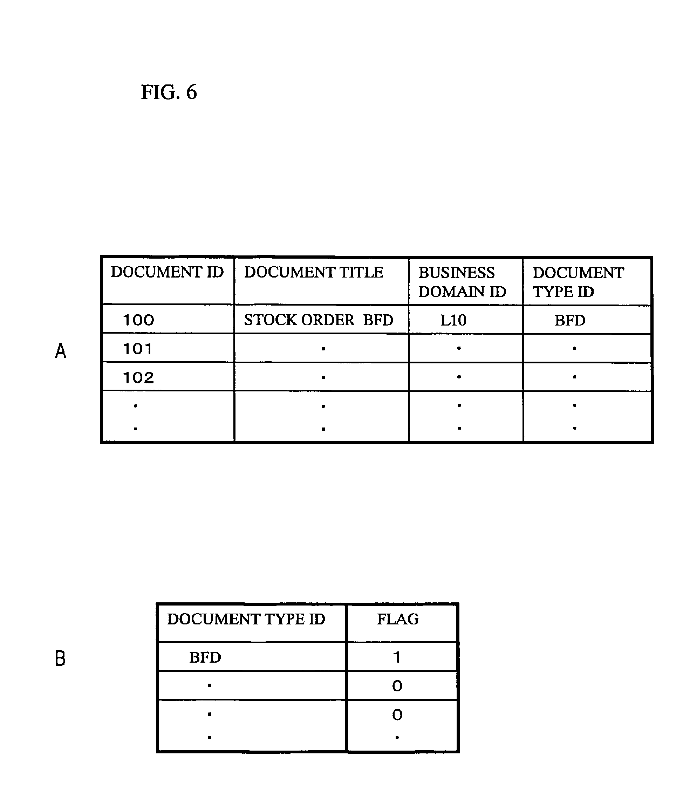

The business domain to be managed by the ERP package is also imparted with a business domain ID for the identification. In the example in Fig. 6A, the database 15 relates the business domain ID to the document ID as well as a document title and a document type ID. The document type ID is used to identify a type of BFD and other documents. As shown in Fig. 6B, the document type ID is related to a flag by the database 15. The flag is for specifying a document ID of the document IDs in the table of Fig. 6, to be linked to the document ID in the table Fig. 5. It is concerned here that '1' is given to a flag corresponding to BFD to be linked to the document ID, while '0' is given to a flag corresponding to the document type except BFD not to be linked to the document ID. Regarding the document type except BFD, if it is linked to the document ID, the flag corresponding to the document type will be set to '1'. As mentioned previously, the document ID and the BFD number are related to the IMG ID information. Therefore, the business domain ID is related to the IMG ID information and the IMG path, when the document IDs are linked.

On receipt of a search request from the web server 11 to specify the BFD number, the search unit 12 searches thus configured database 15 for a data of the IMG path corresponding to the specified BFD number. The search result is returned to the web server 11 from the search unit 12. The search unit 12 can be realized by the cooperation of a program or software component provided with those functions and hardware like CPU or memory in server computer 1.

After obtaining the search result, the web server 11 dynamically creates the web page according to the search result.

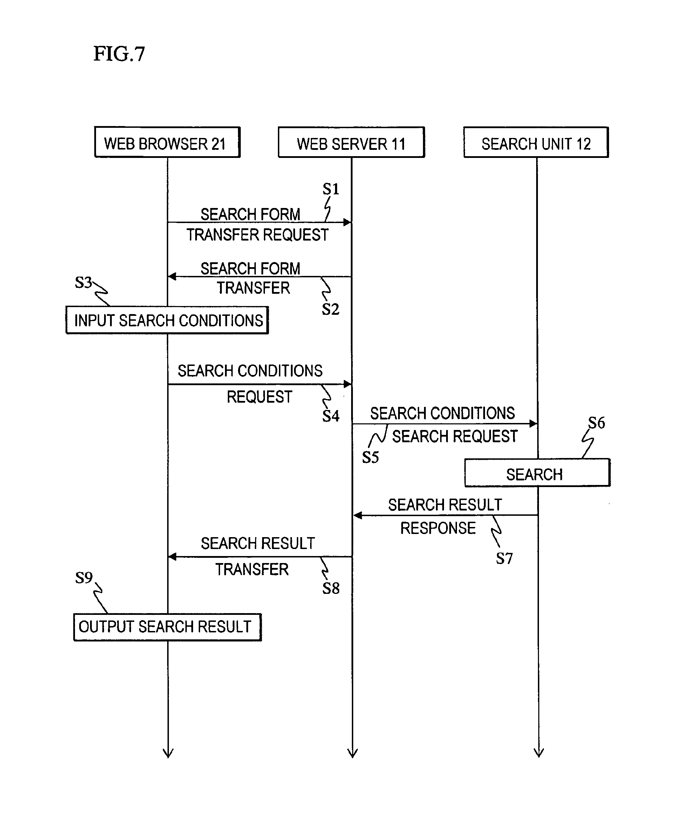

The user, when he/she browses to such search result, gives URL for specifying a search form to the web browser 21 in the first place. Upon receipt of the instruction, the web browser 21 sends the web server 11 a request to transfer the search form (S1), as shown in Fig. 7.

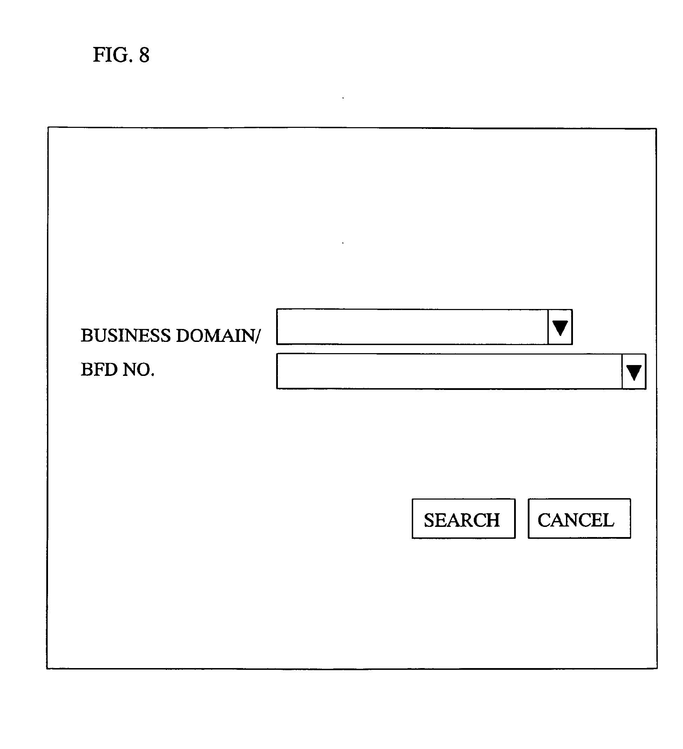

In response to the transfer request, the web server 11 returns the search form as shown in Fig. 8, for example, to the web browser 21 (S2). The form has an input field for inputting the business domain ID, another input field for inputting the BFD number, a search button for instructing the execution of the searching, and a cancel button for canceling the execution of the searching. Using this form, the user can perform the searching by specifying the business domain ID only, otherwise the business domain ID and the BFD number. The business domain ID or the BFD number to be specified may be determined by the user according to the business requirements.

It is supposed that the user inputs the business domain ID and the BFD number into the input fields of the form displayed by the output unit 23, using the input unit 22, and then pushes the search button (S3). At this time, the web browser 21 specifies a script on the server side, and sends the web server 11 a request to post the business domain ID and the BFD number inputted in the input fields (S4). When the web server 11 receives this request, the web server 11 processes the specified script. Thus, a request to search the specified business domain ID and BFD number is given from the web server 11 to the search unit 12 (S5).

Upon receipt of the search request, the search unit 12 searches the IMG path corresponding to the business domain ID and BFD number (S6). Since the document ID is determined by the business domain ID, the IMG path can be searched based on a set of document ID and BFD number. The searching is based on the specified BFD number and other BFD numbers of which the numeric string corresponding to the top layer is identical with that of the specified BFD number. For instance, even when the BFD number is specified by only one numeric string such as 010, the searching is executed based on not only the specified BFD number, but also the other BFD numbers such as 010-010, 010-020, 010-010-010, 010-010-030, and 010-020-010, and so on. When the specified BFD number is a combination of numeric stings such as 010-010, the searching is executed based on the BFD numbers such as 010-010, 010-010-010, 010-010-030, and so on. The search unit 12 searches the database 15 for the document ID and the IMG ID information corresponding to these BFD numbers, whereby the business domain ID and the IMG path corresponding to these BFD numbers can be obtained.

The search result is returned to the web server 11 as mentioned previously (S7), and the web page is created dynamically according to the result. When the web browser 21 receives the web page from the web server 11 (S8), the web page is outputted by the output unit 23. And hereupon, the search result is outputted (S9).

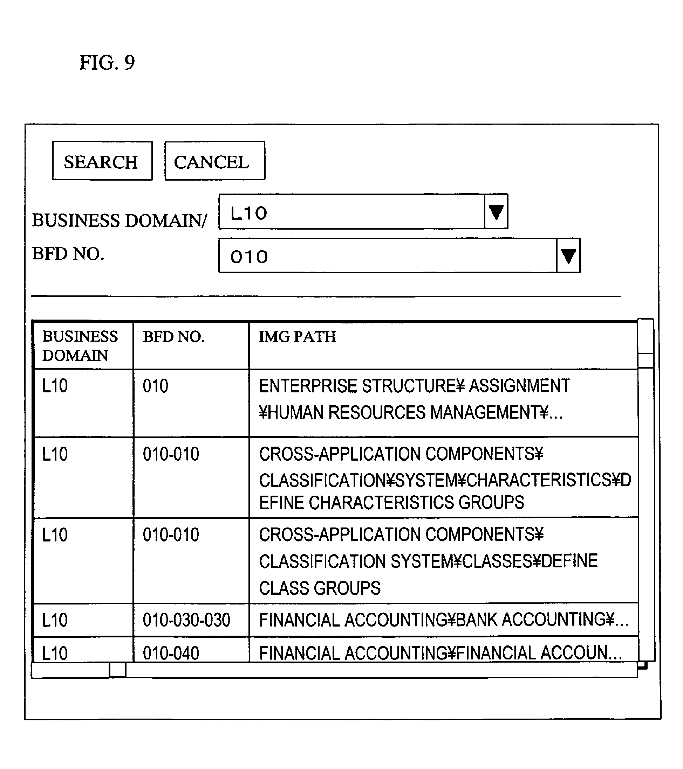

The outputted web page contains a list of the business domain IDs, the BFD number, the other BFD numbers including the same numeric string as the former BFD number, and the IMG paths corresponding to these BFD numbers, as shown in Fig. 9. In Fig. 9, L10 is specified as the business domain ID. In addition, 010 is specified as the BFD number, and the list includes the IMG paths corresponding to the BFD numbers such as 010, 010-010, 010-030-030, and 010-040. As shown by this example, one BFD number may correspond to plural IMG paths.

The user know the business domain ID and the IMG paths corresponding to the BFD numbers by browsing the web page. Therefore, the user needs not to understand the contents of a number of customizing items in order to know the relation between the customizing items and the business elements. If the user can obtain the knowledge for the understanding by this system in a simple manner, the knowledge will be shared by many persons. In addition to the business element corresponding to the specified business domain ID and BFD number, the system can search IMG paths to the other business elements on the lower layer than the business element. Accordingly, if the user can specify only a rough business element based on the business requirement, he/she can get a rough idea of the relevant IMG paths. And, in this example, the searched IMG paths are outputted together with the corresponding business domain IDs and BFD numbers, respectively. When the search result is outputted being combined with the corresponding business element as this example, the user can know the business element expressed by the specified business element.

The data in the database 15 is prepared by an expert having a good knowledge of the introduction and operation of the ERP software, such as a consultant. The expert can enter created data in the database 15 by means of the client computer 2. When the data entry is instructed by the input unit 22, the web browser 21 specifies the script on the server side, and transmits to the web server 11 a request to post the data. Upon receipt of the request, the web server 11 processes the specified script. Hereupon, the web server 11 requests an entry unit 50 to process the data entry, and the entry unit 50 enters the received data in the database 15.

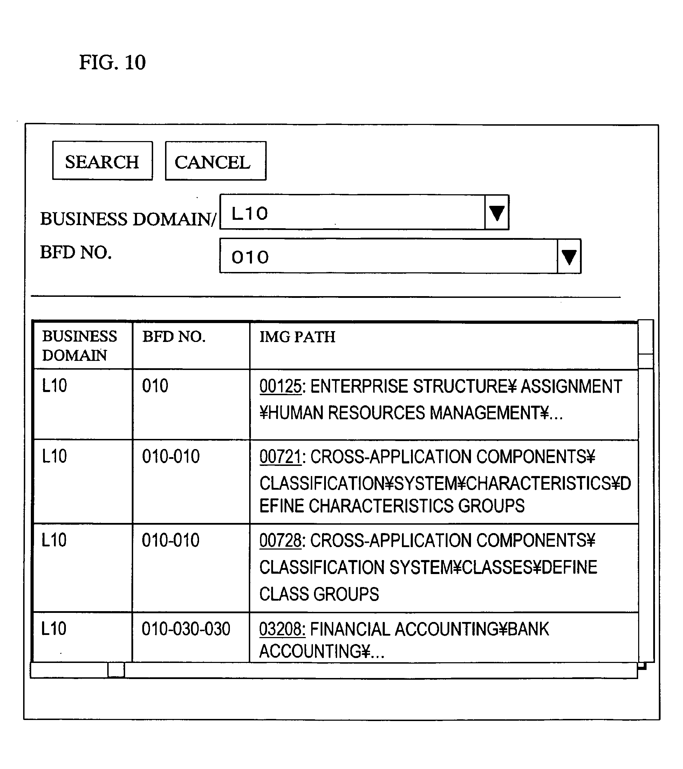

Besides, the search unit 12 may return the IMG ID number or IMG ID information, as well as a set of the business domain ID and the BFD number together with the corresponding IMG paths, as the search result. At this time, the web page dynamically created according to the search result may contain the IMG ID number, as shown in Fig. 10. Moreover, a URL of the web page indicating the IMG note may be returned simultaneously. In this case, the web server 11 creates the web page of the search result dynamically by adding to the IMG ID number with the link to the URL of the web page indicating the note corresponding to the IMG ID number. By adding the link to the web page in this way, the user can know the summary report of the customizing items and the statement of the setting reasons in a simple manner.

When the user inputs only the business domain ID to the input field of the search form, the search unit 12 searches the database 15 for the document ID corresponding to the inputted business domain ID, and obtains the BFD number and IMG ID information corresponding to the document ID found by the search. Accordingly, the search unit 12 can obtain the data of the IMG paths, as well as when the BFD number is inputted.

Since the BFD number and the business domain ID are related to the document ID by the database 15, the search unit 12 can search the database 15 for the document ID of the relevant document corresponding to the BFD number or the business domain ID, instead of the IMG path.

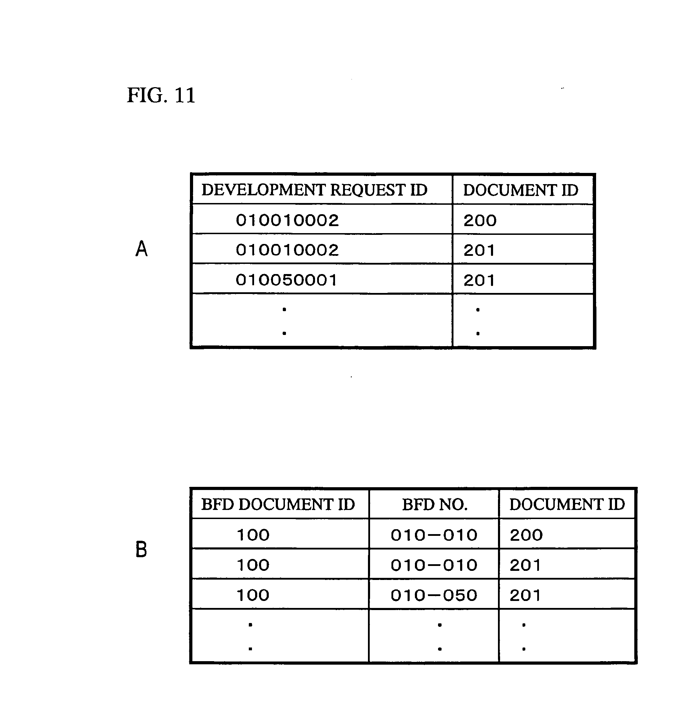

Moreover, the search unit 12 may search for an ID of development information corresponding to the document ID of BFD and the BFD number, instead of the IMG path. At this time, the database 15 is provided with a table relating the development information ID to the document ID. A development request ID can be used as the development information ID. The development request ID is imparted to a development request for identifying a program requested to develop, by the developer. In the table as shown in Fig. 11A, one development request ID can be related to a plurality of document IDs, and one document ID can be related to a plurality development request IDs. Here, the document corresponding to the document ID related to the development request ID is a development document of the documents managed by the document management unit 14, such as the technical specifications and the functional specifications of the program. The database 15 is also provided with a table relating a set of the BFD document ID and the BFD number to the document ID of document to be referred. The referred document ID is a document ID related to the development request ID. As shown in Fig. 11B, in the table, one set is related to a plurality of the referred document IDs, and one referred document ID is related to a plurality of sets.

The set of the BFD document ID and the BFD number is related to the development request ID through the referred document ID. Accordingly, when the user specifies the BFD document ID and the BFD number, the search unit 12 can search for the development request ID corresponding to the specified set.

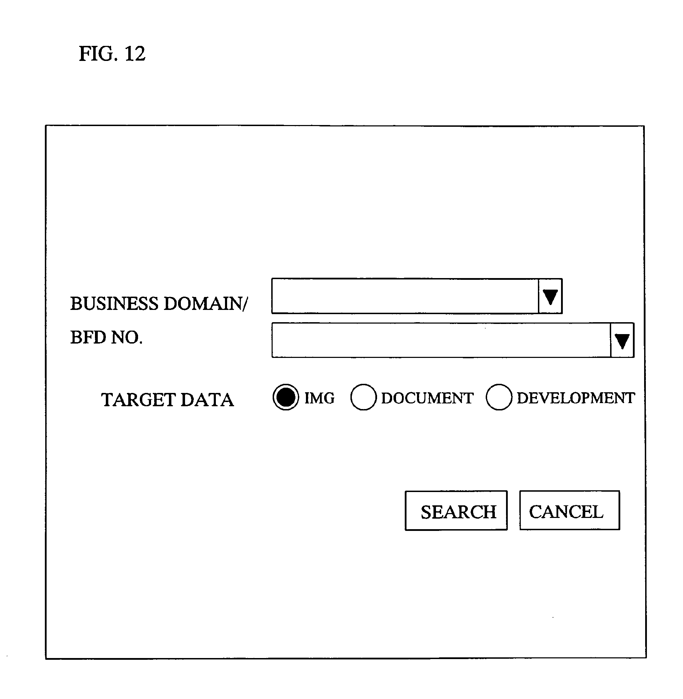

In order to select one of the IMG path, the relevant document, and the development request ID as the search target, the search form is provided with a selection field as shown in Fig. 12, for example. The user selects one of the IMG path, the relevant document, and the development request ID as a target by means of the selection field. A value indicating the selected one is posted to the web server 11 from the web browser 21 as well as the BFD number. When the web server 11 sends the search request to the search unit 12, the value is also given to search unit 12. The search unit 12 determines according to this value which one of the IMG path, the relevant document, and the development request ID the search unit 12 should be searched.

In case of searching for the development request ID, since the development request ID is related to the document ID of the development document, the search unit 12 can also search the document ID of the development document corresponding to the searched development request ID. The directory in which the development document is stored can be specified based on this document ID, and hereupon the link to the development document may be added to the web page of the search result.

The user using this system can easily specify not only the data of the IMG path corresponding to the business requirement, but also the relevant document and the development request. It is possible to make efficient use of the shared documents more than ever.

Moreover, when the shared document includes the document describing the summary report of the development program, an ID of summary report of the development program may be related to the document ID and BFD number by the database 15 as well as the development request ID and the document ID of development document. If the ID of summary report of the development program is related to the document ID and the BFD number, the search unit 12 can also search for the summary report of program, instead of the IMG path.

The summary report of program describes an outline of program function, functional block diagrams, a list of relevant objects, a window of interface, a list of variables, an explanation of modification, and etc. If an ID is given to each explanation, the search unit 12 can search the data of each explanation corresponding to the ID of summary report of the searched program.

According to the above system, the user can refer to the summary report of program corresponding to the business requirement in a simple manner.

(Second Embodiment)
In the first embodiment, the search unit 12 searched the database 15 for the IMG path corresponding to the BFD number, in the meanwhile, the IMG ID information and the BFD number corresponding to the ID number can be searched from the database 15, too.

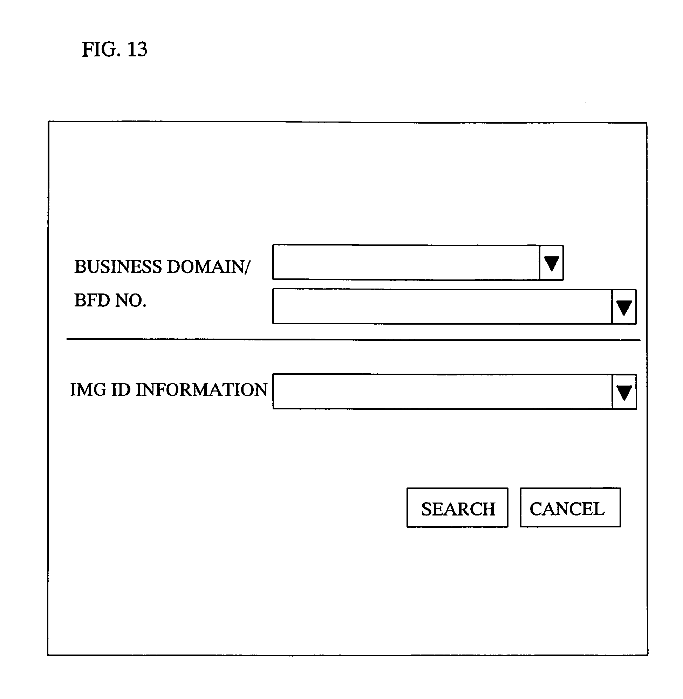

In this case, a search form as shown in Fig. 13, for example, is used. The search form is provided with another input field for inputting the IMG ID information in addition to the input field for inputting the business domain ID and BFD number.

The user inputs only the IMG ID information to the input field of the form, and then presses a search button. The IMG ID information to be inputted may be the information that the user has known, or the one shown in the search result in the first embodiment.

According to the operation, the web browser 21 specifies a script on the server side, and sends to the web server 11 a request to post the IMG ID information inputted in the input field. Upon receipt of this request, the web server 11 sends a search request to the search unit 12 in the same way as the first embodiment. The search unit 12 searches the database 15 for a set of the document ID and the BFD number corresponding to a set of the version, the project, and the IMG ID number that are identical with the specified IMG ID information. In this example, since the business domain ID and the BFD number are not specified, all the sets of the document ID and the BFD number become the target of the search.

The search result is returned to the web server 11 like the first embodiment, and the web page is dynamically created based on the result. After the web browser 21 receives the web page from the web server 11, the web page is outputted from the output unit 23. The outputted web page contains the list of the IMG ID information, and business domain IDs and the BFD numbers corresponding to the IMG ID information.

The user can know the business domain ID and the BFD number corresponding to the specified IMG ID information by browsing the web page. Accordingly, if the user has the knowledge about the customizing items, even though he/she does not know details of the business requirements, he/she can specify the business requirement corresponding to the customizing item with ease. In result, in case of the roll-out of the project to the group companies, this system makes it easy for the user to understand the background of the parameter setting. Additionally, even if the user does not know both the customizing item and the business requirement in details, he/she can understand well both of them by repeating the search of the customizing item corresponding to the business requirement and the search of the business requirement corresponding to the customizing item.

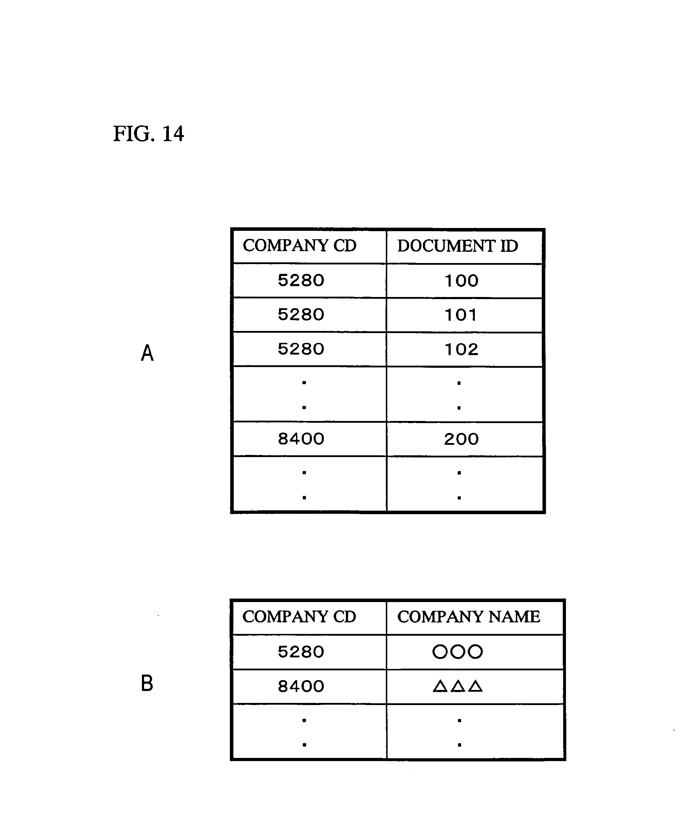

(Third embodiment)
When the relevant document of ERP package is managed for a plurality of companies, a company code may be related to the document ID according to the data of the database 15, as shown in Fig. 14A. As the company code, it is possible to use a unique code to each company defined by the companies. In the master table as shown in Fig. 14B, the company code is related to a company name. If the business organization to manage the business by the ERP package is not a company, it may use a code for identifying the business organization instead of the company code described here. When the company code is related to the document ID, it is possible to execute the search by specifying the company code.

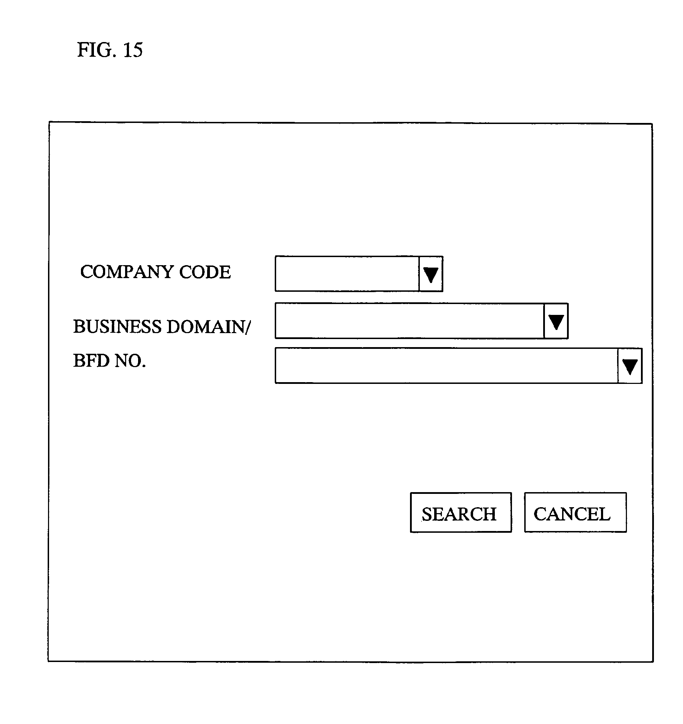

In case of the search for a specific company, the user specifies the company code or the company name of the company by the search form. In an example of Fig. 15, the search form is provided with an input form for inputting the company code. The user inputs the company code into the input field, on demand. Before the search form is transmitted from the web server 11 to the web browser 21, the authentication of the user can be performed. In this case, when the user ID is related to the company code, the company code of the company to which the user belongs can be inserted automatically into the input field of the search form in advance.

At the push of the search button, if the company code has been inputted, the web browser 21 transmits to the web server 11 a request to post the company code together with the inputted other values. Where the company code and the BFD number are specified, the search unit 12 searches the document ID corresponding to the specified company code, and then searches the data of the information and path of the IMG corresponding to the specified BFD number, of the BFD numbers related to the searched document ID.

As the search result, the search unit 12 returns to the web server 11 the data of the company code, the BFD number, the IMG path corresponding to the BFD number. According to the search result, the web server 11 dynamically creates the web page expressing the IMG path for sets of the company code, the business domain ID, and the BFD number.

Where the BFD number and the company code are not specified but the business domain ID is specified, the search unit 12 searches all the company codes and the document IDs corresponding to the specified business domain ID, and obtains the data of all the BFD numbers, the IMG ID information, and the paths that correspond to the searched document IDs.

In this case, the company codes returned to the web server 11 as the search result include those of all the companies having the document corresponding to the specified business domain ID. The search result includes the data of all the BFD numbers and the ING paths corresponding to those documents, so that it is possible to obtain the BFD number expressing the business flow in the business domain corresponding to the specified business domain ID and the data of IMG paths corresponding to those BFD number, for each company.

Since the web page expressing thus search result is outputted by the output unit 23, the user can compare per company what business elements form the business domain, and what customizing items are related to those business element.

If a same business domain exists in the plural companies and a number of common business elements exist in the business domain, in result of considering the business process unique to the respective companies, there is a possibility that parts of the business elements are not even among those companies. If the above comparison can be made, the user can understand something in common or differences with ease.

Besides, even if the company code can be specified as described in the third embodiment, it is possible to search the relevant document and the development request ID as well as the data of IMG paths as described in the first embodiment.

(Fourth Embodiment)
When the project is rolled out to group companies, there are customizing items to which a same parameter is set, or customizing items to which different parameters for the group companies are set for the purpose of absorbing the differences of nations and cultures. In case of modifying the parameter setting that is common to the group companies, there is a possibility that the modification is applied to the other group companies, and it should be considered carefully.

However, an available district, to which the parameter setting for the customizing item is applied, is a unique one to the group company, and even if referring to the implementation guide, the guide does not describe about the available district.

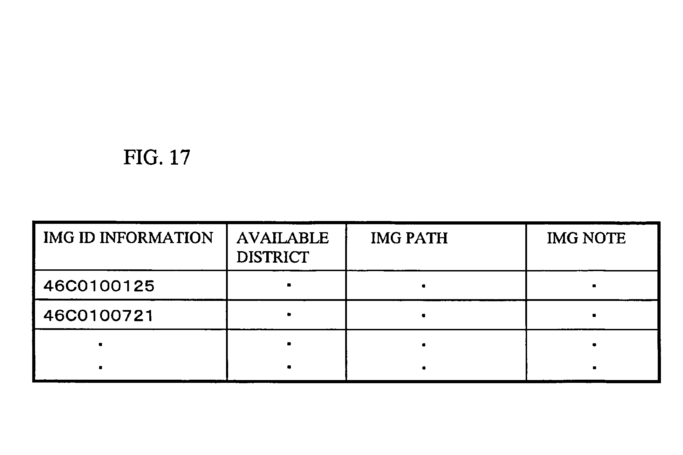

In the system described in this embodiment, as shown in Fig. 17, IMG ID information is related to a section ID of the available district by the data of the database 15, as well as the IMG path and note. In this embodiment, the available district is classified to three sections; a global, a regional, and a local. The global represents that the customizing item is applied to the whole group companies. The regional represents that the customizing item is applied to all the group companies included in any one section of Asia, Europe, America, and the like. The local represents that the customizing item is applied only to a specific company. In the database 15, the respective sections are imparted with section IDs, such as a letter of the alphabet: G, R, and L.

If the section ID is related to the IMG ID information in such way, the search unit 12 can give not only data of the BFD number and the corresponding IMG path, but also the section ID, as the search result, to the web server 11.

When the search result includes the section ID, the web server 11 dynamically creates the web page of the search result including the section ID.

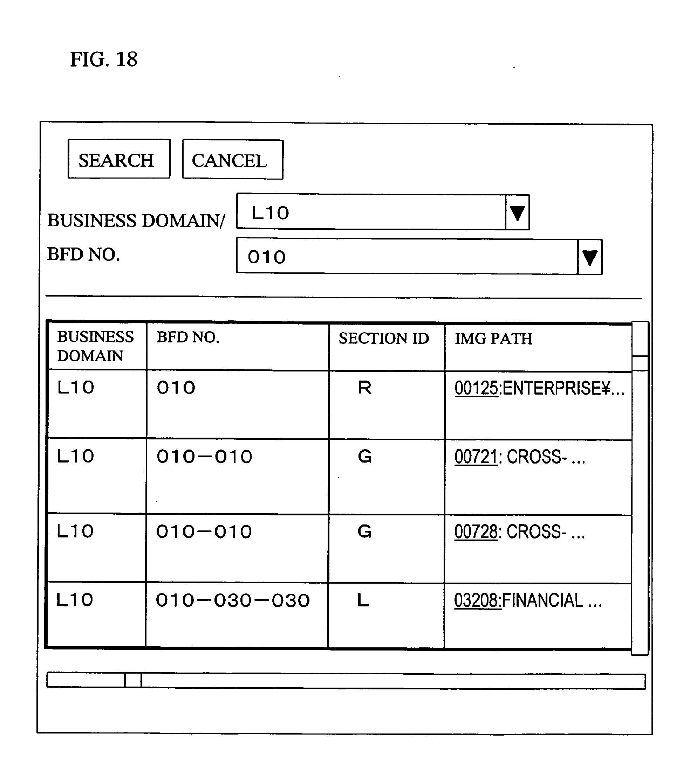

When the web page of the search result shows the section ID for every IMG path as shown in Fig. 18, the user can refer to the web page and know the influenced scope caused from the modification of the customizing item.

In the above-mentioned embodiments, the data is given to the client computer 2 by the search unit 12 and the document management unit 14 through the web server 1 and the web browser 21. Hereupon, the display unit of the client computer 12 works as an output unit of the invention. However, the system of the invention is not limited to this. For instance, if the web page is outputted direct to a display unit connected to the server computer 1, the system of the invention can be realized only by one computer. Additionally, if the search unit 12 and the database 15 are distributed to other computes different from the server computer 11, it is possible to establish the system of the invention by three and more computers. Moreover, a single program can be provided as programs corresponding to the search unit and the document management unit 14, and the web server 11.

Though the respective computers are connected by a local area network, the connecting type is not limited to this. For instance, the client server 2 may be connected to the server computer 1 through Internet.

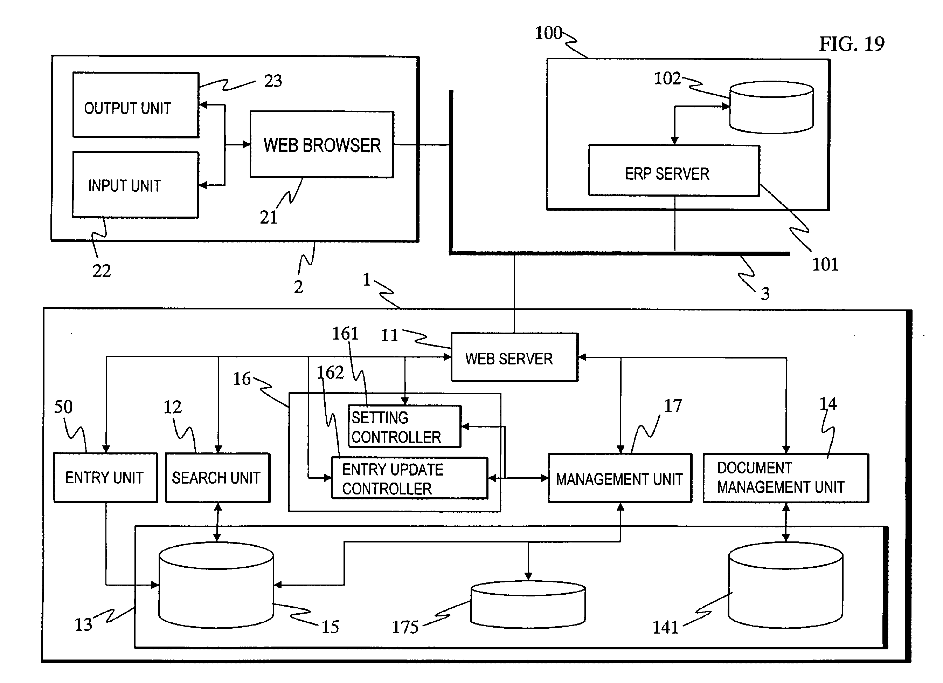

(Fifth Embodiment)
The system of the invention can be used together with an information system provided by the ERP package. In this embodiment, a server computer 100 to realize the information system is connected to the server computer 1 and the client server 2 through the local area network 3, as shown in Fig. 19.

On the server computer 100, an application server 101 implementing the ERP package is running. The application server 101 provides various applications concerned with each core business, like the logistics, the accounting, the personnel resources and the like, to the client. The data concerned with such businesses is managed centrally on a database 102. When a process request or any trigger is received from the client, the application server 101 accesses the database 102, and inputs and updates the data therein, and outputs the result. As for each type of business transaction like order intake and warehousing is reflected on the database 102 by accessing the database 102 from the application server 101 according to the contents of the business transaction.

In the embodiment, the application server 101, which is provided with an interface for the communication with the web browser, can receives a request from the web browser 21 provided on the client computer 2, and then can give a reply thereto. A user interface for operating the information system is provided by using the web browser 21.

The database 15 has the data relation for the ERP package using the application server 101, as described in the previous embodiments.

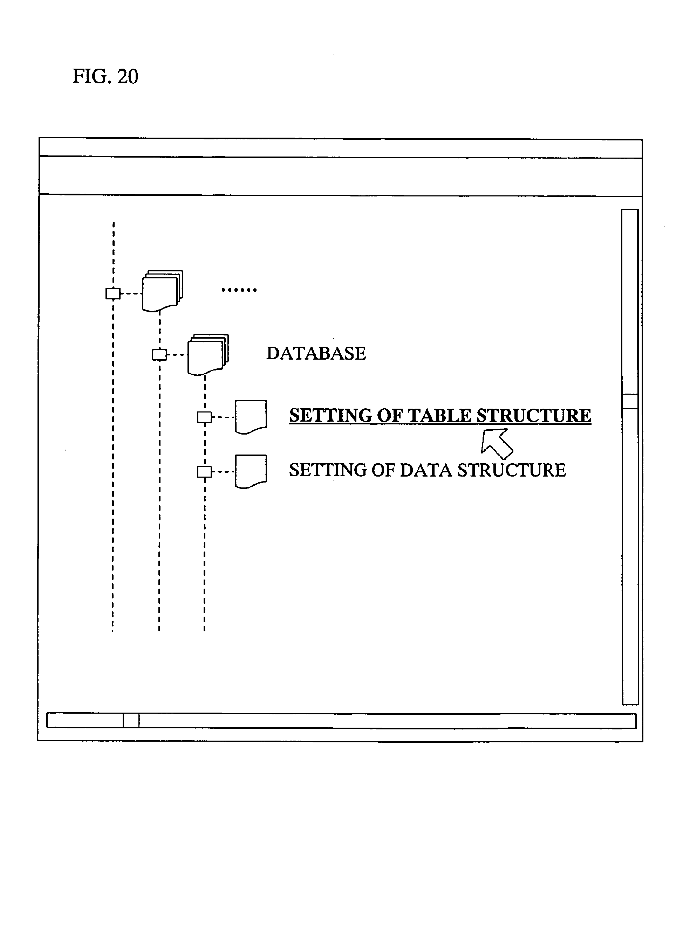

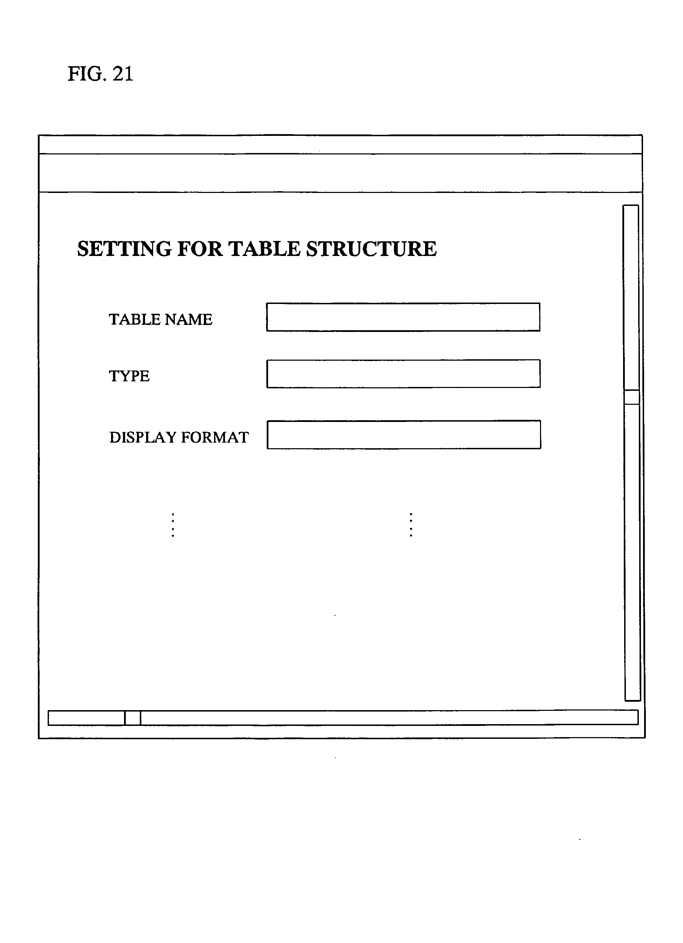

By working a plurality of web browsers 21 on the client computer 21, a user can operate the information system while searching the customizing item, or can search the business element while operating the information system. The searching is executed by specifying the BFD number, with the result that a location of the customizing item is obtained, such as '.../database/setting of table structure.' In this case, on the window for selecting the customizing item of the information system, the customizing item is hierarchized as the obtained search result, as shown in Fig. 20. Accordingly, the user can select the customizing item on the window with ease, on the basis of the location of the searched customizing item. When the customizing item 'setting of table structure' is selected, the setting window corresponding to the selected item is displayed as shown in Fig. 21. When the user is going to do the setting on this window, if he/she confirms which business elements, except for the business element corresponding to the specified BFD number, are related to the setting, he/she can perform further searching for those business elements. This exemplary usage is much available for the introduction of the ERP software to a new business body, and the operation/maintenance thereof, by means of the setting for the past project

As described above, the system of the invention can cooperate with the information system, as well as can work in parallel with the information system.

In the sever computer 1 in this embodiment, a cooperation control unit 16 controls the cooperation with the information system. The cooperation control unit 16 is provided with a setting controller 161 and an entry update controller 162.

According to the location of the customizing item selected from the search result, the setting controller 161 requests the ERP server 101 to automatically display the setting window corresponding to the customizing item on the user interface of the information system. According to the contents of the data entered in the database 15 or the update contents in the database 15, the entry update controller 162 requests the ERP server 101 to enter data in the database 101 or to update the database 102. The data entry and the update of the database 15 are managed by a management unit 17, and the management unit 17 gives the entry update controller 162 the data entry contents and the update data contents.

The ERP server 101 is provided with interfaces for the setting controller 161 and the entry update controller 162, in order to cooperate with the system of the invention. Through the interface, the ERP server 101 receives the process request from the cooperation control unit 161, and gives the processed result to the client designated by the request.

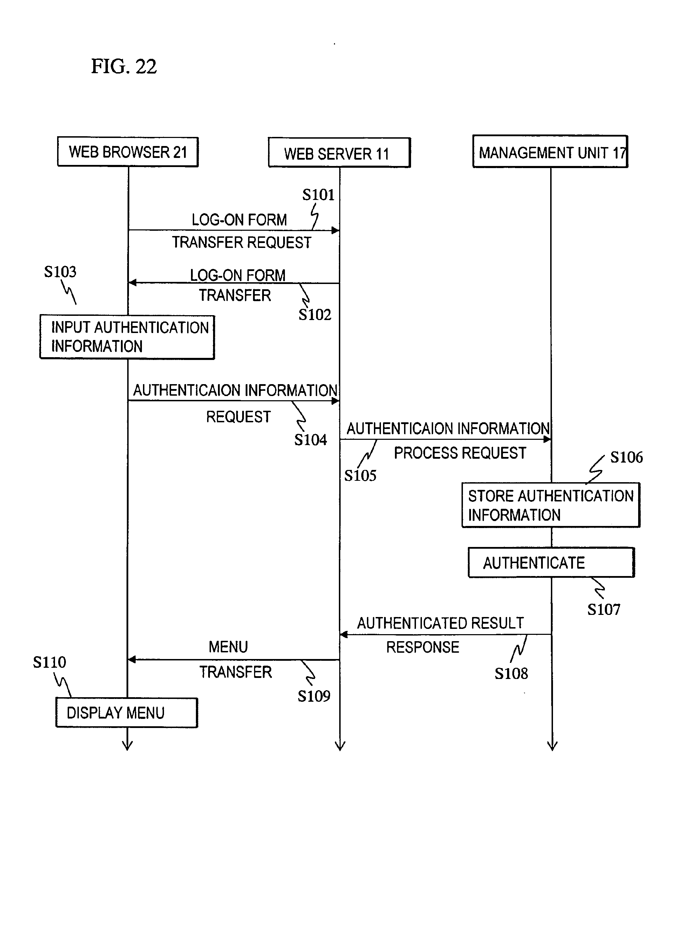

Usually, at using the information system, the user is requested to be authorized. To start the cooperation with the information system, the authentication information inputted at the log-on to the system of the invention can be used to the authentication. Fig. 22 shows steps for the authentication.

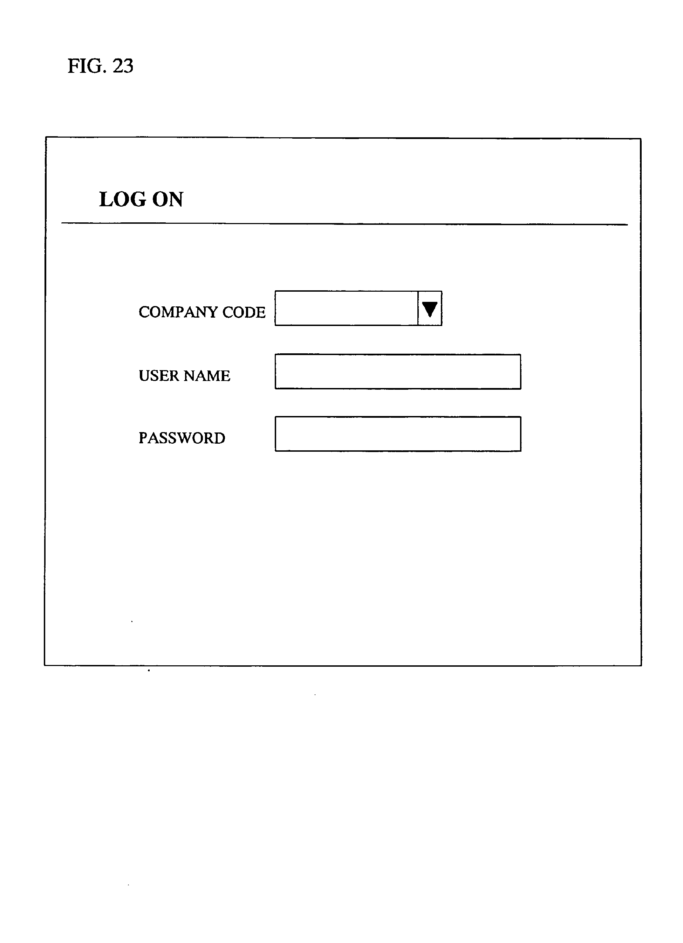

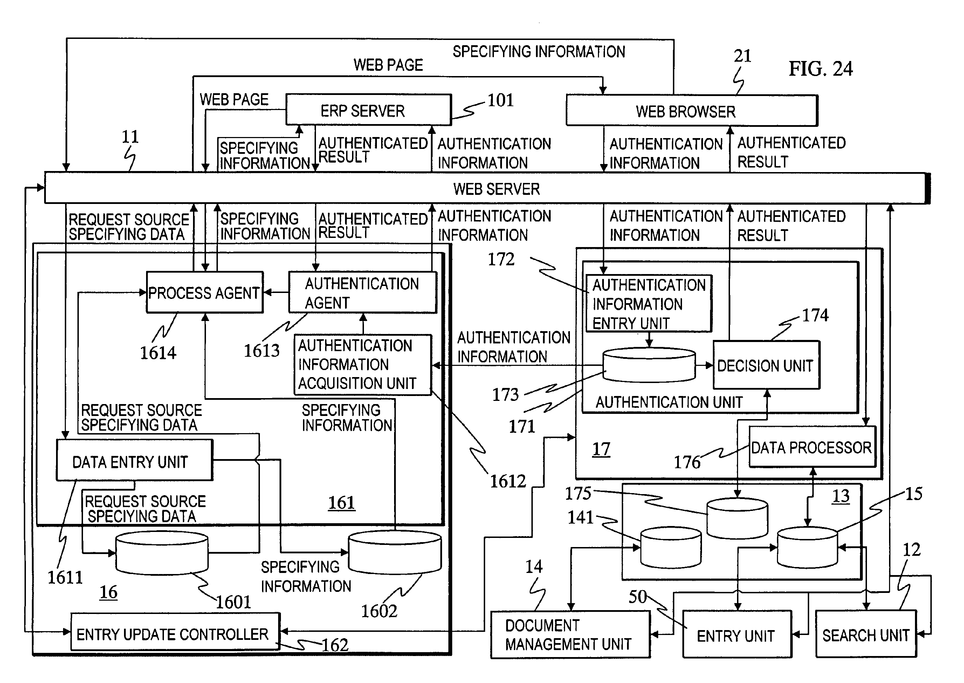

At logging on the system of the invention, the user requests the web server 11 to send a form for inputting the authentication information by means of the web browser 21 (S101). In response to the request, the web page shown in Fig. 23, for example, is transmitted from the web server 11 to the web browser 21 (S102), and then it is displayed by the output unit 23. The log-on window is provided with input fields to which a user name, a password, and a company code are inputted. The user inputs a correct combination into those fields (S103), and logs on the system of the invention. The inputted authentication information is transmitted from the web browser 21 to the web server 11 (S104). The web server 11 requests the management unit 17 to process the authentication information (S105). As shown in Fig. 24, the management unit 17 is provided with an authentication unit 171, and the authentication unit 171 is provided with an authentication information entry unit 172, authentication data storage 173, and a decision unit 174. Upon receipt of the request, the authentication information entry unit 172 of the authentication unit 171 temporarily stores the authentication information in the authentication data storage 173 (S106), and the authentication unit 171 processes the authentication information (S107). For the authentication, the decision unit 174 decides whether or not the data corresponding to the authentication information is entered in an authentication database 175 provided to the storage device 13. If the corresponding data is entered, the authentication is performed normally. The authenticated result is transmitted from the management unit 17 to the web server 11 (S108).

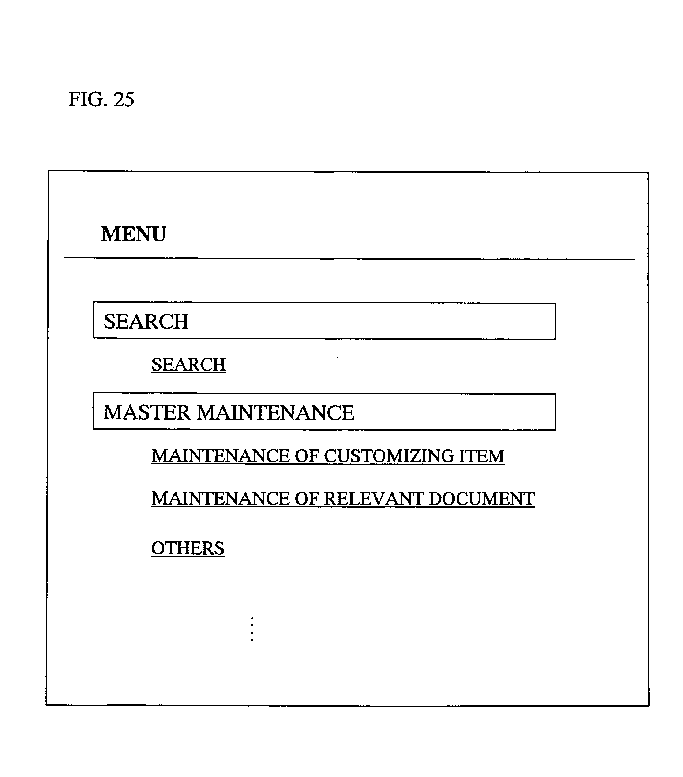

After the managing unit 17 confirms that the inputted information is correct, the web page shown in Fig. 25 is transmitted from the web server 11 to the web browser 21 (S109), and it is displayed by the output unit 23 (S110). On the menu window, items for selecting the processing such as the search and the maintenance are disposed.

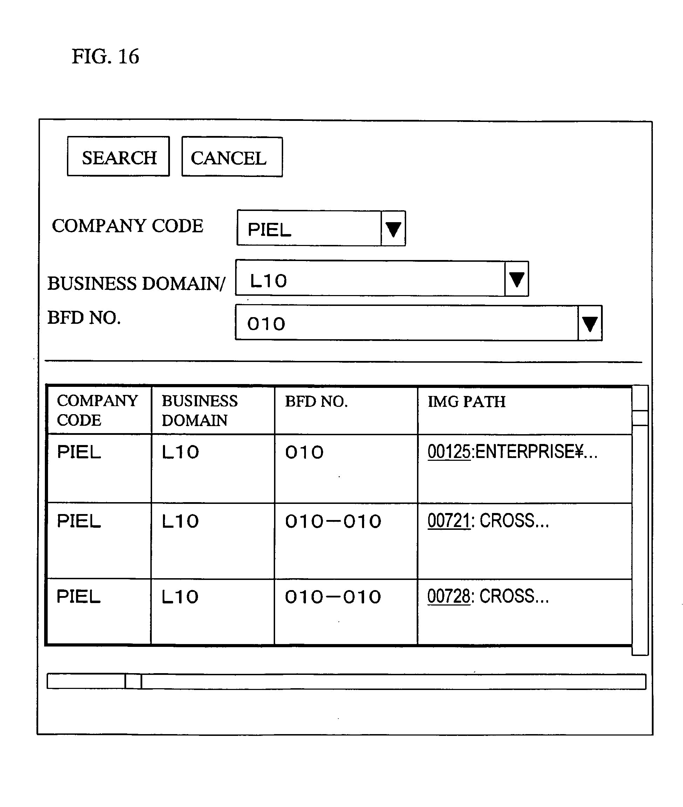

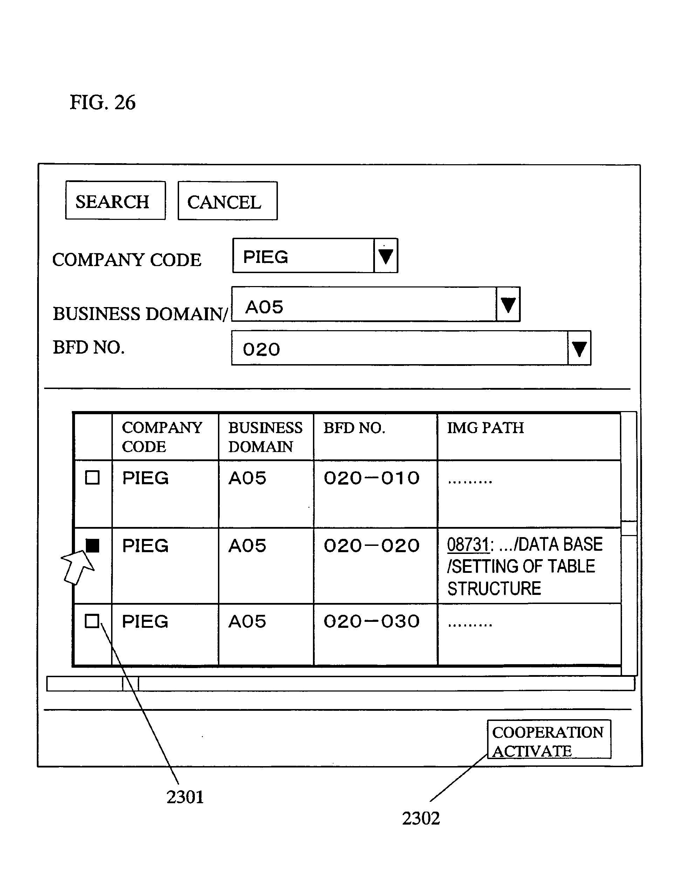

When the user selects the search on the menu window, a request to transfer the search form is transmitted from the web browser 21 to the web server 11. In response to the request, the web server 11 sends back the search form as shown in Fig. 7 and Fig. 15. By using the search form, the search described in the fore-mentioned embodiments is executed. The result is outputted by the output unit 22. In this embodiment, it is assumed that the result as shown in Fig. 26 is outputted. The web page for outputting the result is almost the same as that in Fig. 16, except for a point that a selection box 2301 and cooperation activate button 2302 are provided thereto.

When the user of the system of the invention wants to cooperate with the information system, he/she gives the instruction by means of the selection box 2301 and the cooperation activate button 2302.

The selection box 2301 is provided for every location of customizing items thus searched. Using the selection box 2301, the user can select any one of the locations of the searched customizing items.

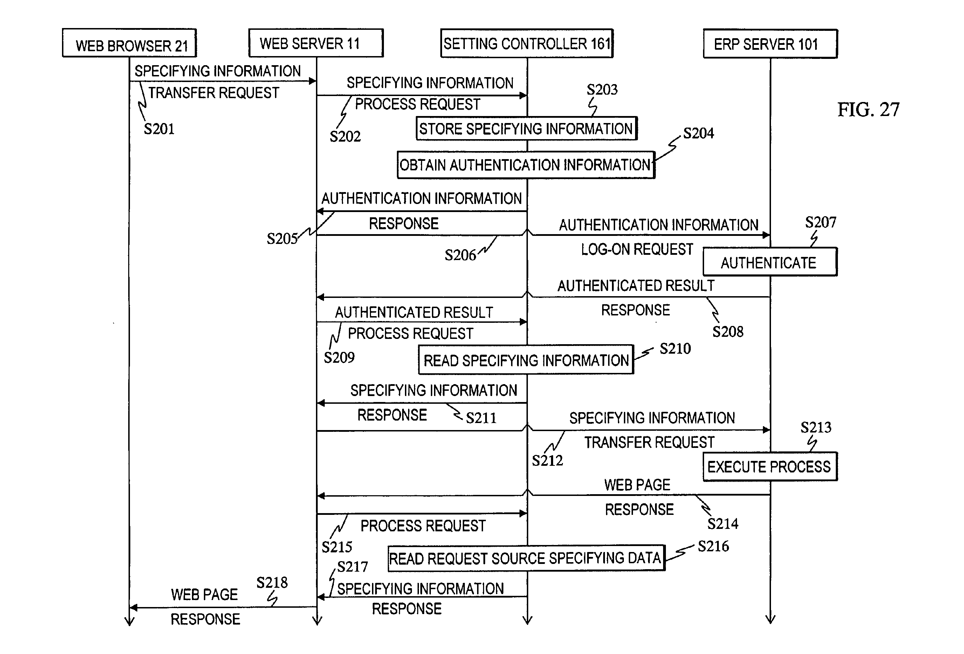

Fig. 27 shows steps of the cooperation processing. The user selects the location of the customizing item by the selection box 2301, and operates the cooperation activate button 232, whereby a request including information for specifying the location of the selected customizing item is transmitted from the web browser 21 to the web server 11 (S201).

Upon receipt of the request, the web server 11 gives the specifying information to the setting controller 161 in the cooperation control unit 16 (S202). As shown in Fig. 24, the setting controller 161 is provided with a data entry unit 1611, an authentication information acquisition unit 1612, an authentication agent 1613, and a process agent 1614. At receiving the request, the data entry unit 1611 of the cooperation control unit 16 obtains data specifying a request source from a request header, such as IP address, and stores the data in a transfer data storage 1601. The specifying information included in the request is stored in a specifying data storage 1602 (S203). The authentication information acquisition unit 1612 obtains the user name and the password from the authentication data storage 171 in the management unit 17 (S204), and the authentication agent 1613 logs on the information system by using them, instead of the user. The log-on request is transmitted to the ERP server 101 through the web server 11 being provided with web client function (S205, S206), and the ERP server 101 performs the authentication (S207). After the ERP server 101 performs the authentication, the corresponding application is activated, and a notice that the authentication is performed normally is given to the authentication agent 1613 in the setting controller 161 through the web server 11 (S208, S209). Upon receipt of the notice, the process agent 1614 of the setting controller 161 reads the data of the information for specifying the location of the selected customizing item from the specifying data storage 1602 (S210), and transmits the process request including the data to the ERP server 101 through the web server 11 (S211, S212). In response to the process request, the ERP server 101 dynamically creates the web page for performing the setting corresponding to the item, based on the specifying information dynamically (S213), and transfers the web page to the web server 11 (S214). After receiving the web page corresponding to the process request from the ERP server 101 through the web server 11 (S215), the process agent 161 reads the data specifying the request source from the transfer data storage 1601 (S216), and then transfer the web page to the web browser 21 on the request source by means of the web server 11 (S217, S218). The web page is for displaying the setting window as shown in Fig. 21.

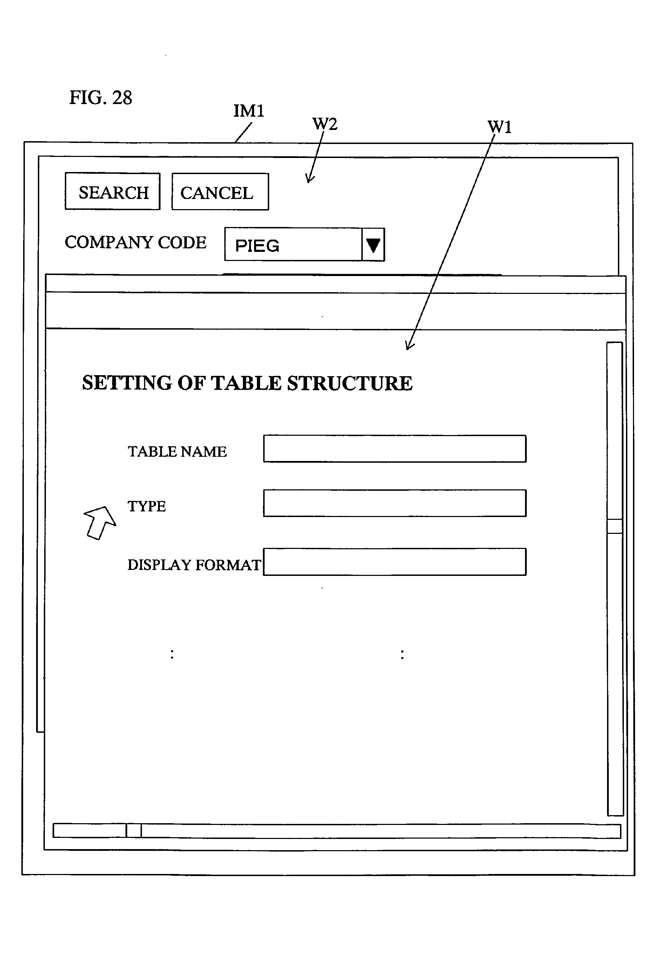

As described above, due to the setting controller 161, the setting window can be displayed automatically. For instance, the setting page shown in Fig. 21 and the output page of the search result shown in Fig. 26 may be displayed on different two windows W1 and W2 of a screen IM1, as shown in Fig. 28.

The user can find an appropriate customizing item in a simple manner and exactly, without referring to the window for selecting the customizing item, on the information system. Additionally, since the setting controller 161 performs the authentication and the process request, it is not necessary to modify the working of the ERP server 101.

When the user selects the maintenance on the menu window shown in Fig. 25, the entry update controller 162 can carry out the cooperation between the system and the information system.

It is assumed that the user selects the data entry in the database 15. The step of the data entry may be substituted by the step for the modification or deletion of the data entered in the database 15 or the update of the database 15. When the user selects the data entry from the menu window, the request including the data entry contents is transmitted from the web browser 21 to the web server 11.

Upon receipt of the request, the web server 11 gives the contents to the entry update controller 162 of the cooperation control unit 16 and the management unit 17. The management unit 17 is provided with a data processor 176 in addition to the authentication unit 171. The data processor 176 enters the data in the database 15 according to the given contents. The entry update controller 162 is provided with a data entry unit 1621, an authentication information acquisition unit 1622, an authentication agent 1623, and a process agent 1624, as well as the setting controller 161. The data entry unit 1621 stores data specifying the request source in the transfer data storage 1601. Like the setting controller 161, the authentication information acquisition unit 1622 obtains the user name and the password from the authentication data storage 171 of the management unit 17, and the authentication agent 1623 logs on the information system by using them, instead of the user. On receiving the notice that the authentication is performed normally, the process agent 1624 of the entry update controller 162 transmits the process request including the data entry contents to the ERP server 101. Upon receipt of the process request, the ERP server 101 accesses the database 102 according to the contents, and then enters the data in the database 102, too. In case of the update contents of the database, the ERP server 101 updates the database 102 according to the contents. And then, the ERP server transmits the web page notifying the processing result about the database 102 to the web server 11 with the web client function. Upon receipt of the web page through the web server 11, the process agent 1624 reads the data specifying the request source from the transfer data storage 1601, and then transfers the web page to the web browser 21 of the request source through the web server 11.

Since the system of the invention is provided with the entry update controller 162 as mentioned above, when the data is entered or the database is updated, the contents is reflected automatically on the database of the information system. Accordingly, it is possible to simplify the steps of the maintenance of both systems, and to ensure the matching property of the information between both systems. Moreover, since the authentication and the process request are processed by the entry update controller 162, it is not necessary to modify the working of the ERP server 101.

### Industrial Applicability

The invention provides an effect that the user can know the relation between the business element and the customizing item with ease, and it is available for the introduction, operation and maintenance of the ERP software, and the governance.

## Claims

1. A system for supporting introduction/operation of Enterprise Resource Planning software, the system supporting introduction or operation of the ERP software by a computer, the computer comprising:
a document management unit configured to manage data of a relevant document of the ERP software, the relevant document including a business flow diagram wherein hierarchized business elements express a business flow in a business domain managed by the ERP software;
a database configured to store data for relating a customizing item, a location of the customizing item, and the relevant document to the business domain and the business element of the ERP software;
a search unit configured to search data of the locations of the customizing items corresponding to a specified business element and other business elements on a lower layer than the specified business element, from the database; and
an output unit configured to output a result of the search.

2. A system for supporting introduction/operation of Enterprise Resource Planning software according to claim 1, wherein, when the customizing item is specified, the search unit searches the data of the business element corresponding to the specified customizing item from the database.

3. A system for supporting introduction/operation of Enterprise Resource Planning software according to claim 1, wherein
the database stores data for relating a section of an available district to the customizing item, and
the search unit searches from the database the data of the section of the available district corresponding to the customizing item of which location is searched.

4. A system for supporting introduction/operation of Enterprise Resource Planning software according to claim 1, wherein, when a business domain is specified instead of the business element, the search unit searches from the database the data of the location of the customizing item corresponding to the specified business domain.

5. A system for supporting introduction/operation of Enterprise Resource Planning software according to claim 4, wherein
the database stores data for relating a business body utilizing the ERP software to business management with the business domain and the business element,
the search unit searches, when the business domain is specified without specifying the business body, searches all the business bodies, and
the output unit outputs the search result combining the corresponding business element and the business body.

6. A system for supporting introduction/operation of Enterprise Resource Planning software according to claim 1, wherein the search unit searches from the database the relevant documents corresponding to the specified business element and the other business elements on the lower layer than the specified business element, instead of the location of the customizing item.

7. A system for supporting introduction/operation of Enterprise Resource Planning software according to claim 1, wherein
the database stores data for relating program development information to the business element,
the search unit searches from the database the program development information corresponding to the specified business element and the other business elements on the lower layer than the specified business element, instead of the location of the customizing item.

8. A system for supporting introduction/operation of Enterprise Resource Planning software according to claim 7, wherein
the data of the relevant document includes data of a program development document,
the database stores data for relating the development document to the development information, and
the search unit searches the development document corresponding to the searched development information.

9. A system for supporting introduction/operation of Enterprise Resource Planning software according to claim 1, wherein
the data of the relevant document includes data of a program summary report,
the database stores data for relating the program summary report to the business element, and
the search unit searches the program summary report corresponding to the specified business element and the other business elements lower layer than the specified business element, instead of the location of the customizing item.

10. A system for supporting introduction/operation of Enterprise Resource Planning software according to claim 1, wherein the computer further comprises a setting control unit configured to, based on the location of the customizing item selected from the searched result, control to display a setting window corresponding to the customizing item on the ERP software.

11. A system for supporting introduction/operation of Enterprise Resource Planning software according to claim 1, wherein the computer further comprises an entry update control unit configured to, based on contents of data entry or update of the database, control to enter and update data on the database managed by the ERP software.

12. A method for supporting introduction/operation of Enterprise Resource Planning software, the method supporting introduction or operation of ERP Software by using a computer provided with a database configured to store data for relating a customizing item, a location the customizing item, and a relevant document to a business domain and a business element of ERP software, the method comprising the computer executable steps of:
managing data of the relevant document of the ERP software, the relevant document including a business flow diagram wherein hierarchized business elements express a business flow in a business domain managed by the ERP software;
searching data of the locations of the customizing items corresponding to a specified business element and other business elements on a lower layer than the specified business element, from the database; and
outputting a result of the search to an output unit.

13. A computer-readable recording medium storing a program for introduction/operation of Enterprise Resource Planning software, the program causing a computer to function as:
a document management unit configured to manage data of a relevant document of the ERP software, the relevant document including a business flow diagram wherein hierarchized business elements express a business flow in a business domain managed by the ERP software;
a database configured to store data for relating a customizing item, a location of the customizing item, and the relevant document to the business domain and the business element of the ERP software;
a search unit configured to search data of the locations of the customizing items corresponding to a specified business element and other business elements on a lower layer than the specified business element, from the database; and
an output unit configured to output a result of the search.

14. A program for introduction/operation of Enterprise Resource Planning software, the program causes a computer to function as:
a document management unit configured to manage data of a relevant document of the ERP software, the relevant document including a business flow diagram wherein hierarchized business elements express a business flow in a business domain managed by the ERP software;
a database configured to store data for relating a customizing item, a location of the customizing item and the relevant document to the business domain and the business element of the ERP software;
a search unit configured to search data of the locations of the customizing items corresponding to a specified business element, and other business elements on a lower layer than the specified business element, from the database; and
an output unit configured to output a result of the search.
